# EUROPEAN PATENT APPLICATION

(11) **EP 4 625 650 A1**
(43) Date of publication of application: **01.10.2025**
(21) Application number: 25165574.2
(22) Date of filing: 24.03.2025
(51) Int. Cl.: H01M 50/209, H01M 50/211, H01M 50/242, H01M 50/249, H01M 50/291, H01M 50/293, H01M 10/04

(54) **BATTERY PACK FOR AN ELECTRICALLY POWERED ROAD VEHICLE AND AN ELECTRICALLY POWERED ROAD VEHICLE PROVIDED WITH SUCH A BATTERY PACK**

(30) Priority: 26.03.2024 IT 202400006727
(71) Applicant: FERRARI S.p.A., 41100 Modena (IT)
(72) Inventor: LERRA, Flavia, 41100 MODENA (IT)
(74) Representative: Studio Torta S.p.A.

(57) **Abstract**

Battery pack for an electrically powered road vehicle; wherein the battery pack comprises: a plurality of planar electrochemical cells arranged in a pack along an axis A; a box-shaped support structure housing the cells; wherein each cell comprises two flat faces orthogonal to the axis A and a thickness s1 along the axis A progressively increasing during the life of the battery pack; wherein between each pair of adjacent cells there is a planar intermediate body in contact with the flat faces of the cells; wherein each planar intermediate body is configured to compress during the progressive increase in thickness s1 of the cells; wherein each planar intermediate body comprises a flat face orthogonal to the axis A contacting the flat face of a first cell of the pair of cells; wherein at least one of the planar intermediate bodies comprises portions with a differentiated thickness s2, s3 along the axis A.

## Description

### CROSS-REFERENCE TO RELATED APPLICATIONS

This patent application claims priority from Italian patent application no. 102024000006727 filed on March 26, 2024, the entire disclosure of which is incorporated herein by reference.

### TECHNICAL FIELD

The technical field of the invention relates to the field of electrically powered road vehicles. This indication comprises both road vehicles with a purely electric powertrain and road vehicles with a double electric and internal combustion powertrain. Even more in detail, the invention relates to a battery pack, i.e. a battery pack comprising a plurality of planar cells housed in a pack along an axis A in a special frame. As is known, at the end of life the cells that make up the battery pack have a greater thickness along the axis A than at the beginning of their life and this progressive increase in thickness translates into a corresponding progressive mechanical stress transferred from the cells to the frame that houses them. In this context, the invention will address the problem of how to limit (namely, reduce compared to the prior art) the stress transferred from the cells to the frame that houses them during the life of the battery pack, because a smaller stress allows the cell containing frame not to be oversized (namely, to be sized "more lightly") with a consequent reduction in the weight of the battery pack, a factor that brings obvious benefits in terms of performance to the entire vehicle. Finally, the invention also relates to a road vehicle comprising a battery pack of the aforesaid type.

### PRIOR ART

In the automotive industry and, in particular, with reference to electrically powered road vehicles, it is known to use lithium batteries to store electrical energy to be supplied during the electric propulsion. Indeed, said lithium batteries offer a high energy density that is ideal for the implementation of electric powertrains in the automotive industry. As a matter of fact, lithium polymers currently represent, from a chemical point of view, the state of the art in the production of high-capacity batteries. These batteries involve the interconnection - in series and in parallel - of different cells (generally, with 3.7 V each) in order to reach the desired total voltage and energy density for a battery pack. The battery modules usually available in the market (not only in the automotive industry, but also in consumer electronics) often comprise planar or pouch batteries, which have a much more limited thickness compared to the other dimensions. There are two very large opposite faces, which are orthogonal to the direction of the battery pack, and four narrow edges, wherein the positive and negative terminals of the cell are arranged on one side or on two opposite sides. In detail, a known electrical energy storage system for an electrically powered vehicle comprises a battery pack comprising a plurality of battery modules electrically connected to one another. Each battery module comprises, in turn, a support structure, which carries a plurality of electrochemical cells electrically connected to one another in series and in parallel. In a known manner, there also are an electrical connector to connect the battery pack to the powertrain system of the vehicle and a control unit (normally called BMS - *"Battery Management System"),* which interacts with all battery modules in order to control and manage each cell or sets of electrochemical cells of each battery module.

Therefore, a battery pack or a module of a battery pack comprises a plurality of planar electrochemical cells arranged in a pack along an axis A and a rigid box-shaped support structure housing the cells. As mentioned above, each cell comprises two flat faces orthogonal to the axis A and a thickness along the axis A, which, starting from a minimum value at the beginning of its life, progressively increases up to a maximum or end-of-life thickness. In order to permit and compensate for this increase in thickness, the cells are separate from one another along the axis A and between each pair of adjacent cells there is an intermediate body or planar separator (called "foam") in contact with the flat faces of the cells. This planar intermediate separator is configured to compress during the progressive increase in thickness of the cells (namely, is made of a material suited to do so). The compression of the planar intermediate separator generates a reaction force against the cells along the axis A, which is released to the rigid support frame of the cells. The rigid frame must therefore be sized so as to withstand this state of stress. Currently, the planar separators interposed between the cells are shaped like a parallelepiped with two opposite flat faces in contact with the cells on opposite sides and a constant thickness along the axis A, which, at the beginning of their life, substantially corresponds to the distance between the cells. This type of planar separator generates, upon compression, a reaction force along the axis A against the cells (and, therefore, against the frame housing the cells) with a nonlinear development, namely, as the compression increases, the generated force increases with a greater gradient (or slope) .

Therefore, starting from this state of the art, there is a need to reduce the stress transferred from the cells to the frame that houses them during the life of the battery pack, because a smaller stress allows the cell containing frame to be sized "more lightly" with a consequent reduction in the weight of the battery pack. This reduction in weight leads to obvious benefits in terms of the performance of the entire car. The stress reduction must be ensured even with the same initial dimensions and with the same materials used so as not to affect the design of the vehicle too much.

### DESCRIPTION OF THE INVENTION

Therefore, the object of the invention is to provide a battery pack for an electrically powered road vehicle suitable for overcoming the drawbacks described above. In addition to the battery pack, the invention also extends to the electric road vehicle provided with said battery pack.

The starting point of the invention is a battery pack comprising a plurality of electrochemical cells, preferably with lithium-ion technology, wherein the cells are planar and are arranged in a pack next to one another along a direction or axis A so as to form at least one module. As it is known (a non-limiting aspect for the invention), each cell comprises two terminal poles, which are usually located in the area of a first edge of the cell, thus creating a contacting plane so that they can easily be connected to one another by means of a longitudinal welding line.

The battery pack comprises (as it is known) a rigid box-shaped support structure housing the cells in a pack along the axis A. At the opposite ends along the axis A, the support structure has special containing elements or plates. Each cell comprises (as it is known) two flat faces orthogonal to the axis A and a thickness along the axis A, which, starting from a minimum value at the beginning of its life, progressively increases during the life of the battery pack up to a maximum or end-of-life thickness. Between each pair of adjacent cells there is, as it is known, an intermediate body or planar separator in contact with the flat faces of the cells C. This planar intermediate body is configured to compress during the progressive increase in thickness of the cells. The progressive compression of the planar intermediate body generates a corresponding force along the axis A, which is released from the cells to the containing plates of the structure. The known technique currently entails the use of planar intermediate bodies shaped like a parallelepiped with a constant thickness, a thickness that, at the beginning of life, substantially corresponds to the distance between two cells along the axis A so that the faces of the cells are substantially completely in contact with the planar intermediate bodies (which hence act as a sort of cushion between the cells).

According to the inventive aspect of the invention, a different shape is suggested for the planar intermediate bodies, which, thanks to the new shape, generate, during the life of the battery (namely, as the thickness of the cells increases), a smaller reaction force in absolute value with a smaller gradient or ramp as a function of compression. This advantage also exists with the same initial dimensions (initial distance between two cells) and with the same materials used to manufacture the planar separator. This advantageous technical effect (smaller stress released to the containing structure) is achieved, in an inventive manner, thanks to planar intermediate bodies comprising:
- a flat face orthogonal to the axis A, which contacts the flat face of a first cell of the pair of cells;
- portions that, starting from the flat face in contact with the first cell, develop along the axis A with a differentiated thickness until they contact, only in the area of the thicker portions, the second cell.

In particular, the planar intermediate bodies of the invention are therefore configured so that:
- at the beginning of the life of the battery pack and, in general, until a threshold value of increased cell thickness is reached during the life of the battery pack, the intermediate body contacts the flat face of the second cell of the pair of cells only in the area of the thicker portions; and
- when the aforesaid threshold value of increased cell thickness is exceeded during the life of the battery pack, the intermediate body contacts the flat face of the second cell of the pair of cells also in the area of the thinner portions.

Therefore, advantageously, during the first compression phases, it is not the entire planar intermediate body that "works", but only the thicker portions, thus leaving the thinner portions not "activated". Consequently, while guaranteeing the compression specifications required at the beginning of life, with the same dimensions and the same material as the known parallelepiped-shaped intermediate body, during the first compression phases (until the "activation" of the thinner portions) the force generated along the axis A is smaller in absolute value and has a less steep ramp as a function of compression. When the thinner portions are also activated, namely when the expansion of the cells also touches these thinner portions, the ramp of the force as a function of the compression has the same slope as the prior but, because of the fact that for the previous compressions the generated stress was smaller, the absolute value curve remains at much lower stress levels. Less stresses transmitted to the structure allow the latter to be sized in an optimal way, reducing its overall weight. The battery pack of the invention obviously comprises at least one novel planar intermediate body as described and claimed herein. The remaining separators can all be novel, some novel and some traditional, or all the remaining separators can be traditional.

Preferably, at the beginning of life and up to the threshold value of increased cell thickness during the life of the battery pack, the planar intermediate body substantially contacts the entire flat face of the first cell of the pair of cells.

Preferably, the planar intermediate body is shaped so as to comprise at least two portions in series along the axis A, namely:
- a planar or parallelepiped-shaped portion with a first flat face orthogonal to the axis A, which contacts the flat face of the first cell, and an opposite second flat face facing the second cell; and
- at least one protruding portion, or protrusion, protruding from the second flat face of the planar portion towards (namely, until it contacts) the second cell of the pair of cells so as to create at least one thicker portion along the axis A.

The aforesaid protrusion, in turn, can be shaped like a parallelepiped so that the face of the protrusion in contact with the second cell is orthogonal to the axis A.

Preferably, the planar intermediate body comprises a plurality of protrusions so that, at the beginning of life and up to the threshold value of increased cell thickness during the life of the battery pack, the planar intermediate body contacts at least half of the surface of the second cell with its thicker portions.

Preferably, the protrusions are evenly arranged on the second flat face of the planar portion so as to create a structure similar to a chocolate bar.

Preferably, a coating or a layer of rigid material can be provided on the face of the cell in contact with the protrusions of the intermediate body so as to distribute the compression load exerted upon the cell evenly and not just punctually in the area of the protrusions.

Preferably, starting from the second flat face of the planar portion along the direction, the protrusions have a thickness equal to the thickness of the planar portion.

Preferably, the planar intermediate body is made of one single material, for example, as it is known, of polyurethane or silicone, or, alternatively, the planar portion and said at least one protrusion are made of different materials.

Preferably, at the beginning of the life of the battery pack, the intermediate body contacts the cells without exerting a reaction force along the axis A or, alternatively, the intermediate body contacts the cells by exerting an initial reaction force along the axis A (initial precompression).

Finally, the invention also extends to any electrically powered road vehicle where a battery pack is installed as a subject-matter of the appended claims. Preferably, the battery pack is arranged transversely to a longitudinal direction of the vehicle and is mounted on a frame at the back of a passenger compartment.

### LIST OF THE DRAWINGS

The invention will now be described with reference to the accompanying drawings, which show some non-limiting embodiments thereof, wherein:
- figure 1 is a schematic perspective view of an electrically powered vehicle, which can be provided with a battery pack according to the invention;
- figure 2 is a schematic perspective view of a battery pack for an electrically powered vehicle, which can be improved according to the invention;
- figure 3 is an exploded view of the battery pack of figure **2****;**
- figure 4 is an enlarged view of a detail of a module of the battery pack of figure 3;
- figures 5 and 6 show a planar intermediate body according to the prior art located between two adjacent cells and in an isolated configuration;
- figures 7 and 8 show a planar intermediate body according to the invention located between two adjacent cells (at the beginning of life or below the threshold value of increased cell thickness during the life of the battery pack) and in an isolated configuration;
- figures 9-11 respectively show a diagram and two tables, which highlight, with the same dimensions and the same material, the advantages deriving from the use of the inventive intermediate body of figure 8 compared to the known intermediate body of figure 6.

### DESCRIPTION OF THE DRAWINGS

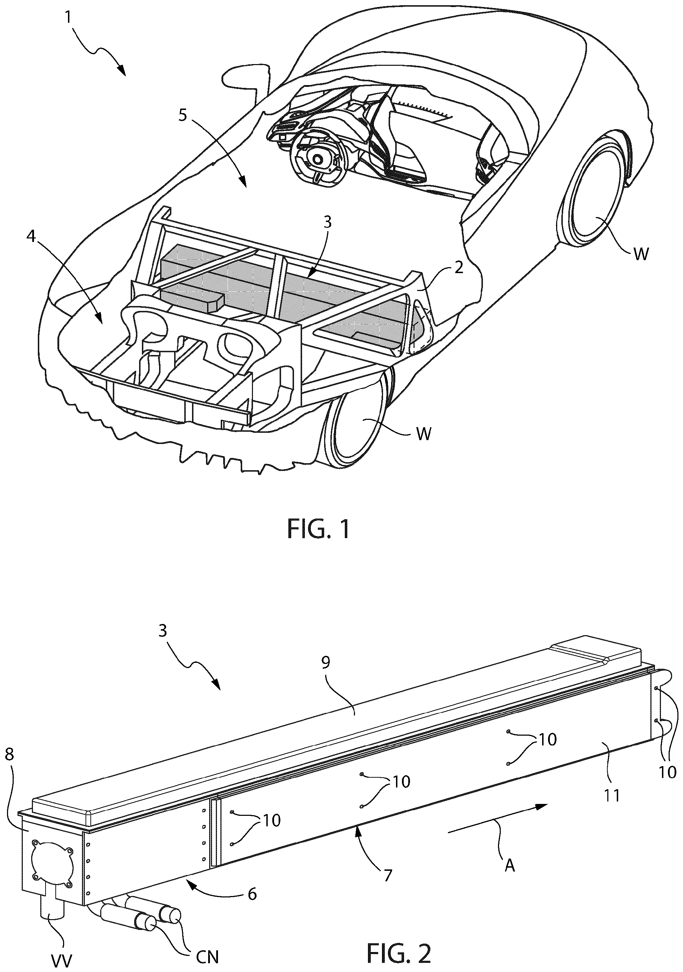

With reference to figure 1, number 1 indicates, as a whole, a road vehicle provided with two front wheels W and with two rear wheels W. The road vehicle 1 is an at least partially electric vehicle and is provided with a frame 2. The road vehicle 1 comprises a battery pack 3, in this example supported by the frame 2 inside an engine compartment 4. As shown in figures, the battery pack is arranged at the back of a passenger compartment 5, for example in the area of a vehicle floorboard, behind the seats contained inside the passenger compartment 5.

Figure 2 shows an example of a battery pack 3, which can be improved according to the invention. In this example and according to the invention, the battery pack 3 has an oblong shape along an axis A and is substantially shaped like a parallelepiped. According to figure 1, the battery pack 3 can be arranged transversely to a longitudinal axis of the vehicle. In particular, the battery pack 3 is suited to be connected to an electric powertrain system (which is not shown herein) of the vehicle 1 and is designed to store the electrical energy produced by an electric machine (which is not shown herein) or released by other sources.

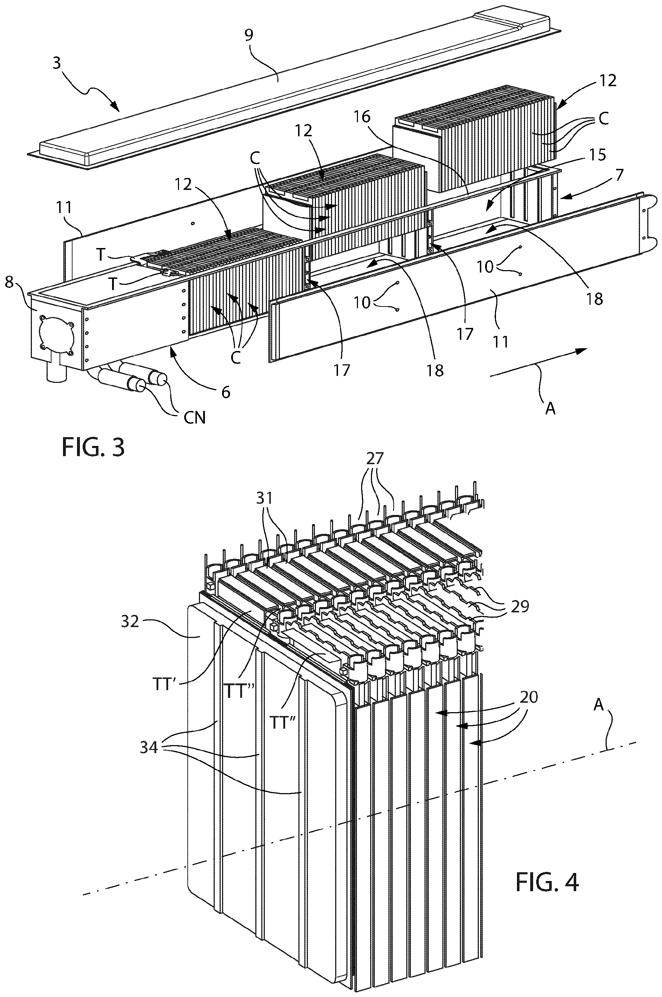

As shown in figures 2 and 3, the battery pack 3 comprises at least one portion 6 configured to house a battery management system - BMS 8 designed to control the operating parameters of the battery. The battery comprises, as it is known, a plurality of cells and the ends of said cells C are connected to terminals T in the area of the portion 6. Two connectors CN project out of the management system 8 and are configured to allow current to flow from and to the management system 8. The battery pack 3 further comprises a portion 7 configured to house the electrochemical cells C, (namely) the active material of the battery pack 3. As shown for example in figure 3, the vehicle battery pack 3 comprises a support structure 15 comprising, in turn, at least to oblong peripheral elements 16 and 18, which face one another and define, between them, a box-shaped portion BP. The battery pack 3 further comprises one or more partitions or plates 17 arranged so as to divide the box-shaped portion BP, thus delimiting at least two housings, wherein the partitions 17 are arranged transversely to the two peripheral elements 16 and 18 facing one another. In other words, the peripheral elements 16 and 18 define two parallel planes, between which the partitions 17 extend transversely (perpendicularly). In the non-limiting embodiment of figure 3, the partitions 17 delimit, inside the box-shaped portion BP, three different housings. The electrochemical cells C are of the planar type, are electrically connected and are parallel both to one another along the axis A and to the partitions 17 and are divided, in this example, into three modules 12.

As shown in figure 4, in this example, the modules 12 each comprise at least two insertion plates 32 arranged at the ends of each module 12, parallel to the partitions 17 and configured to facilitate the insertion of each module 12 under compression into the relative housing, so that the compression remains even after the insertion. In this way, the modules 12 of the cells C are compressed on the outside of the housing and are inserted into the latter keeping the compression. By so doing, the cells C remain compressed between the two partitions 17 delimiting the respective housing. In this example, each insertion plate 32 comprises guide elements 34 configured to direct the module 12 during insertion into the respective housing. Still visible in the example of figure 4, the battery pack 3 comprises a plurality of heat dissipating elements 20. As it is known and visible in the example of figure 4, each cell C comprises a pair of terminal poles TT', TT'' (positive and negative poles, namely cathode and anode) extending on the same side of the cells C. The poles TT', TT'' are supported by a support 27 made of a plastic material. In order to avoid contact between two adjacent cells, the support 27 has a separator 29. In particular, the connection of the terminal poles TT', TT" is obtained in the area of one or more contacting planes 31. For the purposes of the invention, the module can also not be already under conditions of initial compression at the beginning of its life. As it is known, between two adjacent cells there is a cushion (called "foam") configured to absorb the progressive increase in thickness of the cells along the direction A during the life of the battery.

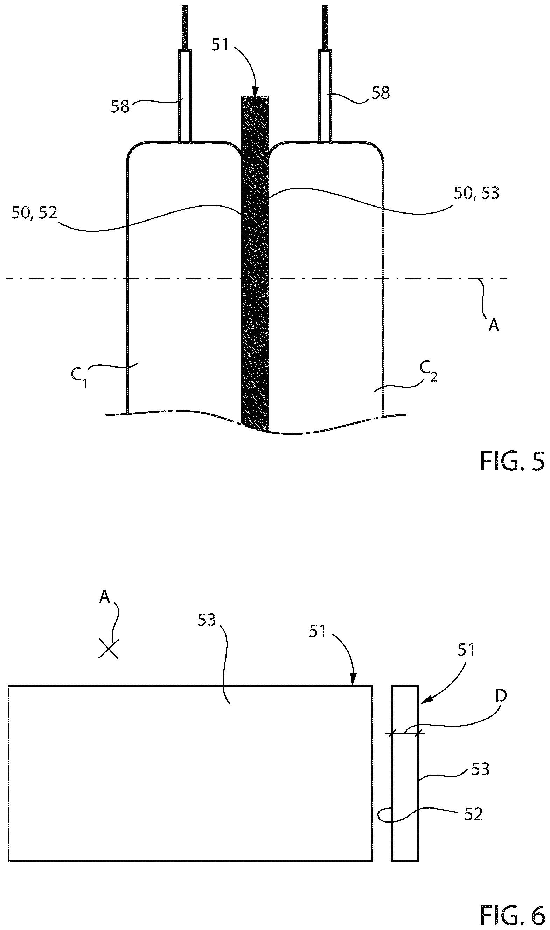

Figures 5 and 6 show an example of a planar intermediate body according to the prior art located between two adjacent cells and in an isolated configuration. In this example, each cell C of the pair C1, C2 comprises two flat faces 50 facing one another and orthogonal to the axis A. Each cell C has a thickness s1 along the axis A, which, starting from a minimum value at the beginning of its life, progressively increases during the life of the battery pack 3 up to a maximum or end-of-life thickness. In this example of the prior art, between each pair of adjacent cells C1, C2 there is a planar intermediate body 51 shaped like a parallelepiped (constant thickness along the direction A) with opposite flat faces 52, 53 in contact with the flat faces 50 of the cells C. Figure 6, in particular, shows the face 53 of said element to show how it is a flat surface and the reference D highlights its constant thickness.

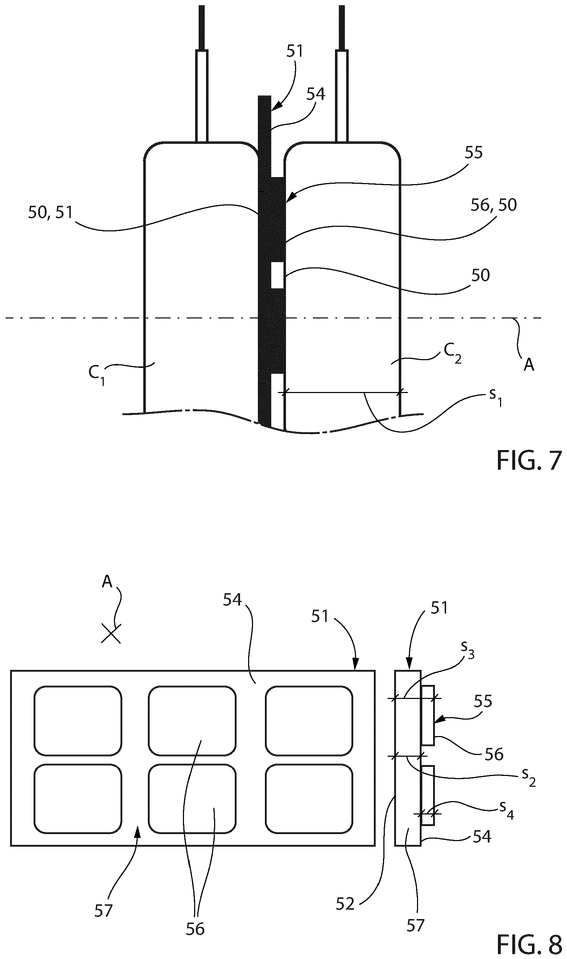

Figures 7 and 8 show a planar intermediate body according to the invention located between two adjacent cells (at the beginning of life or until the threshold value of increased cell thickness is reached during the life of the battery pack) and in an isolated configuration. In this example, just like in general for each planar intermediate body 51, according to the invention there is provided a flat face 52 orthogonal to the axis A, which contacts the flat face 50 of the first cell C1 (on the left) of the pair of cells C1, C2. In an inventive manner, starting from said flat face 52, portions with a differentiated thickness s2, s3 project along the axis A (in this example, two different thicknesses, but other thicknesses can also be provided for a multi-step activation), said differentiated thickness being configured in such a way that:
- at the beginning of the life of the battery pack 3 and up to the threshold value of increased cell thickness during the life of the battery pack, the intermediate body 51 contacts the flat face 50 of the second cell C2 (on the right) of the pair of cells C1, C2 only in the area of the thicker portions s3; and
- when the threshold value of increased thickness s1 of the cells C is exceeded during the life of the battery pack 3, the intermediate body 51 contacts the flat face 50 of the second cell C2 of the pair of cells C1, C2 also in the area of the thinner portions s2.

In this example, before the threshold value of increased cell thickness of the battery pack 3, the planar intermediate body 51 substantially contacts the entire flat face 50 of the first cell C1 of the pair of cells C1, C2 and about half of the flat face 50 of the second cell C2. Also in this example, the planar intermediate body 51 comprises a planar portion 57 with a thickness s2 with the flat face 52 orthogonal to the axis A, which contacts the flat face 50 of a first cell C1, and a second opposite flat face 54. From the second flat face 54 of the planar portion 57 protrude a plurality of parallelepiped-shaped protrusions 55 directed towards the second cell C2 of the pair of cells C1, C2 so as to create at least one thicker portion s3. In this example, the protrusions 55 are evenly arranged on the second flat face 54 of the planar portion 57 so as to create a chocolate bar structure with flat surfaces 56 of the protrusions 55. Also in this example, the protrusions 55 have a thickness s4 (starting from the second flat face 54) equal to the thickness s2 of the planar portion 57. In this example, the planar intermediate body 51 is made of one single material. Alternatively, the planar portion 57 and the protrusions 55 could be made of different materials.

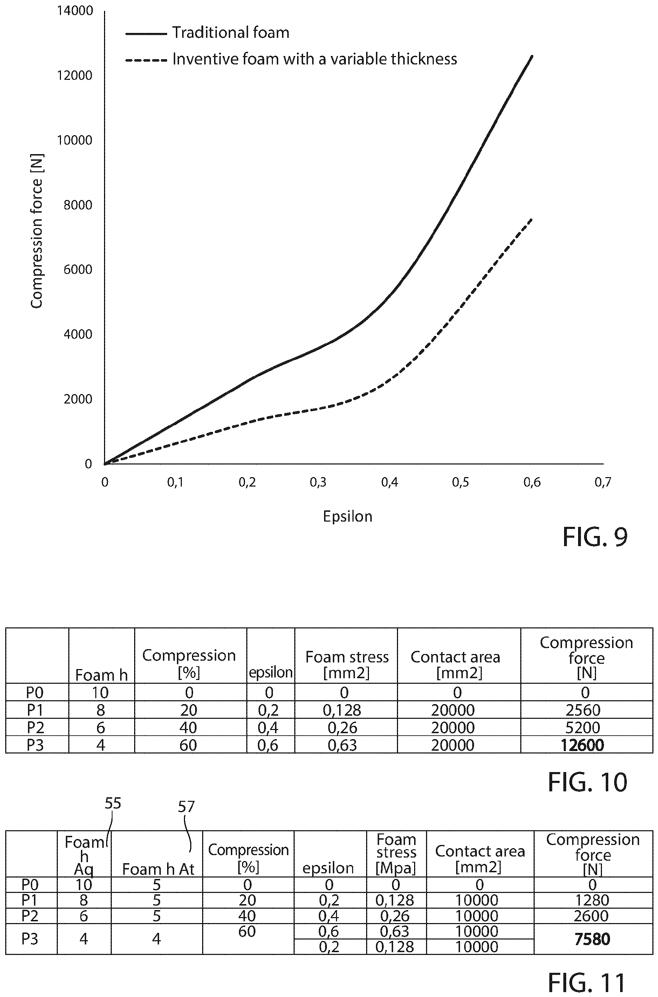

Finally, figures 9-11 respectively show a diagram and two tables, which highlight, with the same dimensions and the same material, the advantages deriving from the use of the inventive intermediate body of figure 8 compared to the known intermediate body of figure 6. It should be pointed out that, even starting at the beginning of life (namely, upon assembly), given the same compression tension, up to the value of "epsilon" 0.4 (namely, up to the activation of the portion 57 with a smaller thickness), both the absolute value and the slope of the graph of the transmitted force are lower (broken line and table of figure 11) compared to the prior art (solid line and table of Figure 10). Starting from the activation of the portion 57 with a smaller thickness ("epsilon" greater than 0.4), the slope of the curves is the same, however, with very different starting points at epsilon 0.4, which lead to very different final values (advantageously lower in the invention).

## Claims

1. Battery pack for an electrically powered road vehicle (1);
wherein the battery pack (3) comprises:
- a plurality of planar electrochemical cells (C) arranged in a pack along an axis (A);
- a box-shaped support structure (15) housing the cells (C);
wherein each cell (C) comprises two flat faces (50) orthogonal to the axis (A) and a thickness (s1) along the axis (A) gradually increasing during the life of the battery pack (3);
wherein between each pair of adjacent cells (C1, C2) there is a planar intermediate body (51) in contact with the flat faces (50) of the cells (C);
wherein each planar intermediate body (51) is configured to compress during the progressive increase in thickness (s1) of the cells (C);
wherein each planar intermediate body (51) comprises a plane face (52) orthogonal to the axis (A) that contacts the plane face (50) of a first cell (C1) of the cell pair (C1, C2); **characterised in that**
at least one of the planar intermediate bodies (51) comprises portions with differentiated thickness (s2, s3) along the axis (A).

2. Battery pack as claimed in claim 1, wherein the portions with differentiated thickness (s2, s3) along the axis (A) are configured in such a way that:
- below a threshold value of increased cell thickness (s1) of the cells (C), the intermediate body (51) contacts the flat face (50) of the second cell (C2) of the cell pair (C1, C2) only at the thickest portions (s3); and
- above the threshold value of increased cell thickness (s1) of the cells (C), the intermediate body (51) contacts the flat face (50) of the second cell (C2) of the cell pair (C1, C2) also at the thinner portions (s2).

3. Battery pack as claimed in claim 1 or 2, wherein below the threshold value of increased cell thickness (s1) of the cells (C) the planar intermediate body (51) contacts substantially all of the flat face (50) a first cell (C1) of the pair of cells (C1, C2).

4. Battery pack as claimed in anyone of the preceding claims, wherein the planar intermediate body (51) comprises a planar portion (57) having a thickness (s2) with the planar face (52) orthogonal to the axis (A) contacting the planar face (50) of a first cell (C1) and a second opposing planar face (54); the planar intermediate body (51) comprises at least one protrusion (55) protruding from the second flat face (54) planar portion (57) towards the second cell (C2) of the pair of cells (C1, C2) to make at least one thicker portion (s3).

5. Battery pack as claimed in claim 4, wherein the planar intermediate body (51) comprises a plurality of protrusions (55) such that below the threshold value of increased cell thickness (s1) of the cells (C) the planar intermediate body (51) contacts at least half of the surface (50) of the second cell (C2).

6. Battery pack as claimed in claim 5, wherein the protrusions (55) are homogenously arranged on the second flat face (54) of the planar portion (57).

7. Battery pack as claimed in claim 4 or 5 or 6, wherein starting from the second flat face (54) of the planar portion (57) along the direction (A) the projections (55) have a thickness (s4) equal to the thickness (s2) of the planar portion (57).

8. Battery pack as claimed in any one of the preceding claims 4 to 7, wherein the planar intermediate body (51) is made from a single material or the planar portion (57) and the at least one protrusion (55) are made from different materials.

9. Battery pack as claimed in any one of the preceding claims, wherein at the beginning of the life of the battery pack (3), the intermediate body (51) contacts cells (C1, C2) without exerting a reaction force along the axis (A) or the intermediate body (51) contacts cells (C1, C2) by exerting an initial reaction force along the axis (A).

10. A battery pack as claimed in any one of the preceding claims, wherein on the flat face (50) of the second cell (C2) of the pair of cells (Cl, C2) that below the threshold value of increased cell thickness (s1) of the cells (C) contacts only the thicker portions (s3) a layer or coating of rigid material is provided.

11. Electrically propelled road vehicle (1); wherein the vehicle (1) comprises a battery pack (3) according to any one of the preceding claims.

12. Vehicle as claimed in claim 11, wherein the battery pack (3) is arranged transversely to a longitudinal direction of the vehicle (1) and is mounted on a frame (2) at the rear of a passenger compartment (5).
